# EUROPÄISCHE PATENTANMELDUNG

(11) **EP 1 136 251 A2**
(43) Veröffentlichungstag der Anmeldung: **26.09.2001**
(21) Anmeldenummer: 01105836.9
(22) Anmeldetag: 09.03.2001
(51) Int. Cl.: B32B 21/00, B32B 29/00, B44C 5/04

(54) **Verfahren zur Herstellung dekorativer plattenförmiger Verbundwerkstoffe**

(30) Priorität: 23.03.2000 DE 10014567
(71) Anmelder: DEKODUR GmbH & Co. KG, 69434 Hirschhorn/Neckar (DE)
(72) Erfinder: André, Volkmar Reinhart, 69434 Hirschhorn/Neckar (DE); Oelkers, Friedrich, 69434 Hirschhorn/Neckar (DE)
(74) Vertreter: Mutzbauer, Helmut, Dr.

(57) **Zusammenfassung**

Dekorative Schichtstoffkörper oder Verbundwerkstoffe mit mehreren nebeneinander sichtbaren Dekoreffekten erhält man durch Verpressen eines Stapels aus mehreren, zuvor nicht miteinander verpressten Einzellagen von harzgetränkten Papierbahnen sowie gegebenenfalls mindestens einer Metallfolie, gegebenenfalls unter Mitverwendung eines Holzwerkstoffkörpers, indem man mindestens zwei übereinander angeordnete dekorative Schichten, nämlich eine untere Schicht D1 und/oder M und eine obere Schicht D2 anordnet, von denen die obere Schicht D2 aus einer mit Durchbrüchen versehenen Dekorpapierbahn besteht, die vor dem Herstellen der Durchbrüche und somit vor dem Auflegen auf den zu verpressenden Papierstapel vorgehärtet worden ist.

## Beschreibung

Kunstharzgebundene plattenförmige Werkstoffe, sog. Schichtstoffplatten, sind als außerordentlich robuste und dauerhafte Werkstoffe seit langem bekannt. Sie finden einerseits als technische Werkstoffe, z.B. in der Elektroindustrie als Isolierstoffe und Träger für elektrische Bauteile, in der Gegenwart vor allem als Träger gedruckter Schaltungen ausgedehnte Verwendung.

Andererseits finden Schichtstoffplatten mit dekorativ gestalteter, insbesondere farbiger Oberfläche als sog. Kunststoffoberflächen z.B. in der Möbelindustrie, d.h. im Haushaltsbereich, an öffentlichen Orten, z.B. zur Gestaltung von Wandflächen in Eisenbahn- und Straßenbahnfahrzeugen, als Tischoberflächen in Kantinen, für Fußböden und bei vielen sonstigen Gelegenheiten Verwendung. Es gibt praktisch kaum einen Bereich des täglichen Lebens, an dem man ihnen nicht begegnet. In neuerer Zeit ist auch die Nachahmung metallischer Oberflächen sehr beliebt geworden.

Zur Herstellung dekorativer Schichtstoffplatten findet ein Schichtaufbau statt: Zunächst werden einige Lagen mit Kunstharz getränkter preiswerter Materialbahnen ("Träger") aus zellulosehaltigem oder anderem Material (z.B. Gewebe oder ein anderes verfilztes oder gewebtes Zellulosematerial, in der Regel jedoch Papier, insbesondere Kraftpapier, ein sonst für Verpackungen verwendetes Papier hoher Festigkeit aus Sulfat-Zellstoff) auf eine stabile Platte gelegt, die später in eine Plattenpresse gebracht werden kann. Auch anorganische Träger wie Glas-oder Mineralfasern oder synthetische Fasermaterialien können für Spezialzwecke verwendet werden.

Als Kunstharz für den sog. Grundkörper wird aus wirtschaftlichen Gründen gewöhnlich ein duroplastisch härtbares Phenol-Formaldehyd-(Vor)kondensat ("Phenolharz") eingesetzt, jedoch sind rein technisch auch andere duroplastisch aushärtbare Harze, etwa Formaldehyd-(Vor)kondensate wie Melamin- oder Harnstoffharze geeignet.

Wenn der Schichtstoffaufbau über einem Holzwerkstoff vorgenommen wird, ergibt sich ein Plattenwerkstoff, der sich als Konstruktionswerkstoff eignet, für dessen Herstellung im allgemeinen nur eine oder zwei Lagen des Grundkörpermaterials benötigt werden, soviel als man braucht, um die Restunebenheiten der Holzwerkstoffplatte zu beseitigen. Bei bereits besonders glatten Oberflächen der Holzwerkstoffplatte kann auch auf das Grundkörpermaterial verzichtet werden. In solchen Fällen besonders einfachen Schichtaufbaus über einer Spanplatte wird auch von "vergüteter Spanplatte" gesprochen.

Über dem Grundkörper bzw, direkt auf die Spanplatte werden eine oder bevorzugt mehrere Lagen von Papier aufgelegt, die mit einem hellfarbigen Harz getränkt sind, z.B. einem Melaminharz.

Der Träger für diese Dekorschicht besteht i.d.R. aus einem reinen Zellulosepapier, das entweder durch die Pigmentierung allein wirkt oder zusätzlich bedruckt ist und mit dem harzgetränkten Grundkörper in einem Zug in der beheizbaren Presse, d.h. unter Druck- und Wärmeeinwirkung durch gemeinsames Aushärten verbunden wird. Als Bindemittel für die Dekorschicht wählt man wie gesagt, nicht das gewöhnlich rotbraun gefärbte Phenolharz, sondern ein helles, nach Möglichkeit farbloses Kunstharz. Außer den gelegentlich verwendeten härtbaren (d.h. vernetzbaren) Acrylharzen werden für die Dekorschicht wegen der angestrebten Haltbarkeit vor allem duroplastisch härtbare, d.h. vernetzende Melamin-Formaldehyd-Kondensate ("Melaminharze") oder doch unter Mitverwendung von Melamin hergestellte Kondensate verwendet. Z.B. können Harnstoffharze bzw. Melamin-Harnstoff-Mischharze verwendet werden; die Beständigkeit gegen äußere Einflüsse hängt u.a. vom Melaminanteil ab. Über der Dekorschicht können weitere Schichten angeordnet werden, zur Verbesserung der Verschleißfestigkeit beispielsweise Deckschichten aus einem Material, das nach dem Aushärzen des Harzes transluzent (durchsichtig) wird, eines sog. Overlays. Hierfür werden in der Regel reine Zellulosepapiere verwendet.

Es ist ein allgemeines Entwicklungsziel, möglichst fantasievolle, andererseits aber mechanisch und chemisch widerstandsfähige Oberflächen zu erzeugen, wobei aber im Vordergrund neben der ästhetischen Wirkung auch die Wirtschaftlichkeit der Herstellung steht; denn bei aller Widerstandsfähigkeit steht im Hintergrund die Erfahrung, dass auch mit noch so dekorativen Oberflächen gestaltete Erzeugnisse nach wenigen Jahren wieder umgestaltet werden.

Bekannt ist z.B., über dem Grundkörper als dekorative Schicht eine Metallfolie aufzukleben, wobei ein Schichtstoff entsteht, der äußerlich einer massiven Metallplatte täuschend ähnlich ist und dennoch viele Vorteile besitzt, die gewöhnlich nur von Kunststoffen bekannt sind. Die Metallfolie kann dabei die gesamte Fläche bilden oder aber eine vorhandene Dekorschicht nur teilweise überdecken, indem man eine mit Durchbrüchen versehene Metallfolie verwendet, die an den freien Stellen den dekorativen Untergrund durchtreten lässt. Beim Verpressen werden die Niveau-Unterschiede eingeebnet, sodass die Oberfläche danach einheitlich eben erscheint. Beispielsweise lassen sich auf diese Weise metallbeschichtete Platten herstellen, die scheinbar auf der metallischen Fläche Muster aus Kunststoff aufweisen. Ein derartiger Vorschlag ist der deutschen Gebrauchsmusterschrift 295 06 391 zu entnehmen. Auf die nachstehend erörterte Problematik ist diese Technik jedoch nicht anwendbar.

Ein häufiges Gestaltungselement dekorativer Schichtstoffplatten ist die Gestaltung von Mustern, d.h. mehr oder minder regelmäßigen Dekorelementen, die sich in einem bestimmten Rastermaß wiederholen. Ein einfaches Beispiel wäre eine blaue Fläche, die etwa gelbe Punkte aufwiese. Eine solche Fläche kann gegenwärtig nur mit einem entsprechend bedruckten Dekorpapier erhalten werden. Abgesehen von der vermehrten Lagerhaltung beim Hersteller weisen aber mit Mustern bedruckte Papiere nach dem Verpressen und insbesondere dann, wenn noch ein Overlay verwendet worden ist, unvermeidliche Unschärfen auf, die unschön wirken. Vor allem im Übergangsbereich des von einem Muster zum anderen, das schon drucktechnisch nicht sehr gut beherrscht wird, treten Randunschärfen auf. Außerdem ist die Herstellung der erforderlichen speziellen Dekorpapiere unwirtschaftlich, weil diese dem wechselnden Geschmack unterliegen und oft nicht in ausreichend großen Partien benötigt werden.

Es wurde daher in der nicht vorveröffentlichten DE-A-199 20 915 beiläufig vorgeschlagen, bei Verbundwerkstoffen, nämlich dekorativ beschichteten Holzwerkstoffen, über einem ersten Dekorpapier ein mit Durchbrüchen versehenes zweites Dekorpapier anzuordnen, was ersichtlich den in der deutschen Gebrauchsmusterschrift 295 06 391 enthaltenen Gedanken aufgreift.

Dieser Vorschlag lässt sich jedoch, wie die Erfahrung und das Fehlen eines Beispiels in der DE-A-199 20 915 zeigt, mit den verfügbaren Mitteln der Herstellungstechnik für dekorative Schichtstoffplatten nicht verwirklichen: Erstens lassen sich Papierbahnen, die Durchbrüche aufweisen, auf den verfügbaren Tränkanlagen nicht verarbeiten, ohne dass es zu Bahnrissen kommt; weiter ist es nicht möglich, die Umgebung der Durchbrüche, selbst wenn vorausgesetzt wird, dass sie scharfrandig ausgestanzt sind, so zu tränken, daß die Ränder der Durchbrüche nach dem Verpressen scharfrandig bleiben. Außerdem tritt an diesen Rändern beim Verpressen unvermeidlich überschüssiges Harz aus, was nicht hingenommen werden kann.

Die auf den ersten Blick naheliegende Überlegung, bereits mit Harz getränkte Papiere zu stanzen, scheidet aus, da harzgetränkte Papiere bekanntlich außerordentlich brüchig und schon bei der gewöhnlichen Verarbeitung mit großer Vorsicht zu handhaben sind.

Es wurde nun eine verblüffend einfache Lösung des bestehenden Problems gefunden, mit dem auf Kunststoffoberflächen neben einem Grundmuster (das vorzugsweise auch eine einheitlich gefärbte, d.h. unstrukturierte Fläche bilden kann) andere, vorzugsweise in einem Raster angeordnete Flächenelemente praktisch beliebiger Form erzeugt werden können.

Erfindungsgemäß erreicht man den gewünschten Effekt dadurch, dass man über dem bekannten Schichtaufbau aus harzgetränkten Papieren, mit oder ohne Holzwerkstoff, der zu einem Grundkörper bzw. einer Trägerschicht führt, ein durchgehendes Dekorpapier und/oder, wenn gewünscht, auch eine entsprechende Metallfolie aufbringt und darüber ein mit Durchbrüchen versehenes weiteres Dekorpapier, das jedoch erfindungsgemäß auf eine spezielle Weise vorbereitet worden ist.

Unmittelbarer Erfindungsgegenstand ist ein Verfahren zur Herstellung dekorativer Schichtstoffkörper oder Verbundwerkstoffe, bei dem mehrere Einzellagen von harzgetränkten Papieren miteinander verpresst werden, wobei die von außen sichtbare Oberfläche durch mindestens zwei übereinander angeordnete Schichten oder Lagen gebildet wird von denen die untere aus mindestens einem harzgetränkten Papier mit dekorativem Muster und/oder einer Metallfolie und die obere Lage aus einem mit Durchbrüchen versehenen Dekorpapier besteht, das die Sicht auf die darunter befindliche Lage teilweise freigibt, dessen erfindungsgemäß wesentliche Maßnahme darin besteht, daß ein mit Durchbrüchen versehenes Dekorpapier eingesetzt wird, das vor dem Herstellen der Durchbrüche einer Wärmebehandlung unterworfen worden ist.

Unter Wärmebehandlung versteht man, dass das harzgetränkte Dekorpapier vor dem Herstellen der Durchbrüche und somit vor dem Auflegen auf den zu verpressenden Papierstapel vorgehärtet worden ist. Das heißt, dass die Kondensation der zur Tränkung verwendeten Vorkondensate, sei es, dass es sich um die gängigsten Vorkondensate aus Melamin und Formaldehyd oder um andere, weiterkondensierbare Harze handelt, soweit fortgeführt worden ist, dass die Harze eine teilvernetzte Struktur angenommen haben, die sich noch durch Elastizität und Geschmeidigkeit auszeichnet. Dieser Zustand, d.h. der bestgeeignete Härtungsgrad, kann durch eine einfache Versuchsreihe leicht festgestellt werden, bei der eine gewisse Anzahl von Proben unter gleichen Bedingungen, d.h. gleicher Temperatur, Luftfeuchte etc. erhitzt und in Abständen jeweils Proben entnommen werden. Die benötigte Zeit für die Probe mit den besten Elastizitätseigenschaften wird festgehalten und bildet die Grundlage zur Durchführung des erfindungsgemäßen Verfahrens bei der gewählten Temperatur. Es versteht sich, dass für jede andere Temperatur eine ebensolche Versuchsreihe vorzunehmen wäre.

Mit dieser Erfindung ist der zunächst rein theoretische Gedanke der DE-A-199 20 915 in technisch einfacher Weise zu verwirklichen: Nunmehr können in harzgetränkte Papiere praktisch beliebige, auch ausgedehnte Durchbrüche gestanzt werden, da die vorgehärteten Papiere nicht mehr brüchig, sondern bei Einhaltung eines geeigneten Härtungsgrads sogar ziemlich elastisch sind; sie können z.B. auch zu Strukturen verarbeiten werden, die nicht ebenflächig sind, sondern gekrümmte Oberflächen haben. Die Erfindung ist insoweit nicht auf ebenflächige Platten begrenzt. Jedenfalls zeigt es sich überraschenderweise, dass ein nach dem Vorhärten mit Durchbrüchen versehenes Dekorpapier um diese Durchbrüche herum scharfrandig begrenzt ist und dies auch während des Verpressens bleibt, d.h. dass beim Verpressen praktisch kein Harz austritt und drittens, dass ungeachtet des Vorhärtens bei Wahl einer vernünftigen Vorpresszeit dem vorgehärteten Papier noch genügend Bindungskraft verbleibt, um einen einwandfreien Verbund mit dem Untergrund zu garantieren. Dies liegt u.a. auch daran, dass ja das untere Dekorpapier seine volle Bindungskraft weiterhin besitzt, sodass die Rest-Bindungskräfte des vorgehärteten Papiers zur Bindung mit dem Untergrund ausreichen.

Erfindungsgemäß stellt man somit dekorative Schichtstoffkörper mit mehreren übereinander angeordneten Dekorschichten, von denen die oberste Durchbrüche aufweist, dadurch her, dass man die Durchbrüche erst nach einer Vorhärtung des vorgesehenen Dekorpapiers ausstanzt und das Durchbrüche aufweisende Dekorpapier nunmehr in an sich bekannter Weise verpresst. Anstelle des Ausstanzens kann man natürlich auch andere Techniken zur Herstellung von Löchern in flächigen Materialien anwenden, z.B. das Ausschneiden mittels eines Laserstrahls.

Das zur Verwendung im erfindungsgemäßen Verfahren benötigte harzgetränkte Papier kann ein zweckmäßig mit einem Melamin/Formaldehyd-Vorkondensat getränktes und getrocknetes Papier sein, das für den Fachmann in jeder Weise zum Stand der Technik gehört und nicht näher beschrieben zu werden braucht.

Die erfindungsgemäße Vorhärtung kann in einer üblichen Plattenpresse zwischen den üblichen Pressblechen vorgenommen werden. Es ist aber auch möglich, die Vorhärtung bereits bei der Herstellung auf einer Tränkanlage im Tunnelofen vorzunehmen, der einen regelmäßigen Bestandteil solcher Tränkanlagen bildet, indem man einfach die Verweilzeit, bzw. bei gegebener Länge des Ofens, die Bahngeschwindigkeit verringert. Der erforderliche Härtungsgrad, d.h. die einzustellende Temperatur und Verweilzeit, können in einfacher Weise durch einen Vorversuch ermittelt werden. Die Arbeitstemperatur für die Vorbehandlung kann der üblichen Presstemperatur entsprechen und z.B. zwischen 100 und 200°C liegen. Sie ist an sich nicht erfindungsspezifisch, sondern es muß lediglich die Verweilzeit auf die vorgesehene Arbeitstemperatur abgestimmt werden. Diese Aufgabe ist für jeden Fachmann mit geringem Aufwand routinemäßig durchführbar.

Nach der Vorhärtung ist das so vorbehandelte Dekorpapier praktisch beliebig lagerfähig. Sobald es benötigt wird, werden Durchbrüche mittels einer - zweckmäßig kontinuierlich arbeitenden - Stanze oder einem anderen Schneidewerkzeug angebracht. Form, Zahl, Größe und Anordnung der Durchbrüche kann beliebig sein. Auch der Flächenanteil der Durchbrüche im Verhältnis zur Gesamtfläche kann fast beliebig sein und z.B. 1 bis 75 % oder mehr betragen. Es sollte aus rein praktischen Gründen allerdings eine Materialmenge verbleiben, die sich als zusammenhängende Bahn noch handhaben läßt. Eine Restfläche von 25 % der Gesamtfläche dürfte auf jeden Fall noch gut handhabbar sein, denn die vorgehärtete Bahn ist überhaupt nicht mehr brüchig und ungeachtet der Tatsache, dass sie unter Umständen nurmehr aus einem mehr oder minder ausgeprägten Gitter besteht, leicht zu handhaben.

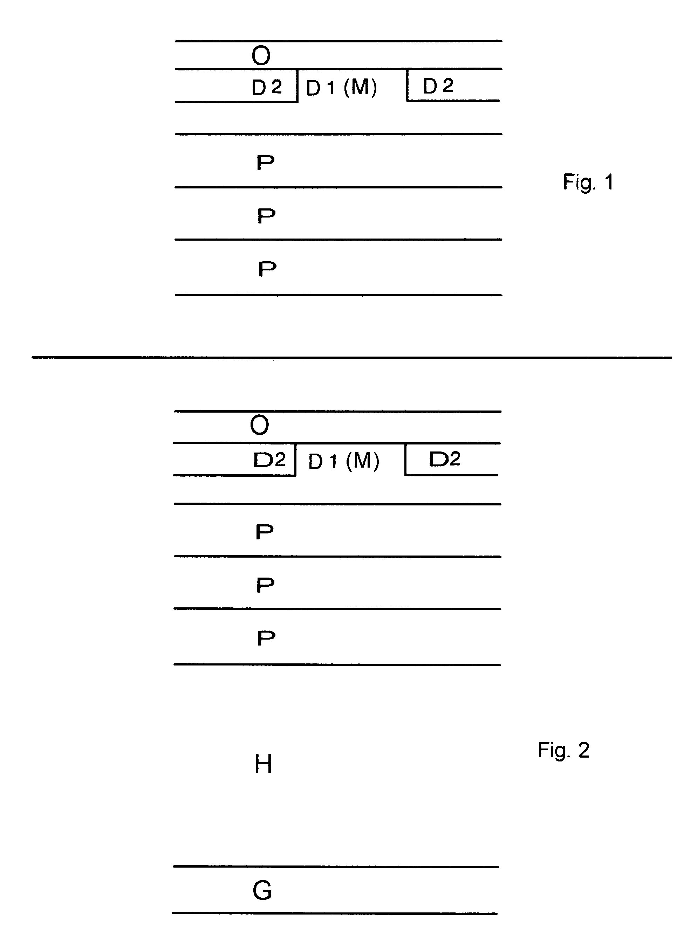

Das erfindungsgemäße Verfahren kann sowohl mit einem üblichen Dekorpapier D1 (vgl. Fig. 1), als auch mit einer Metallfolie M als erster Schicht durchgeführt werden. Im letzteren Falle ist es allerdings zweckmäßig, die Metallfolie beidseitig mit einem Haftvermittler für das Tränkharz auszurüsten. Geeignete Haftvermittler sind verfügbar und die benötigten Metallfolien können bereits beim Lieferanten entsprechend ausgerüstet werden.

Das erfindungsgemäße Verfahren kann in jedem der bekannten Bereiche der Herstellungstechnik für Schichtstoffe verwendet werden: Im einfachsten Falle bei den klassischen Schichtstoffen, die gegenwärtig auch als HPL-(High Pressure Laminate-)Platten bezeichnet werden; ferner mit besonderem Vorteil auch bei der Beschichtung von Holzwerkstoffen "in einem Zug". Über diese Technik, die zu Holzwerkstoffplatten führt, die manchmal als "vergütete" Platten bezeichnet werden, kann man sich in sehr allgemeiner Form aus der o.g. DE-A-199 20 915 unterrichten, deren gesamter Inhalt durch die Bezugnahme in die vorliegende Beschreibung aufgenommen wird.

Danach dienen als Holzwerkstoffträger regelmäßig Flachpressplatten, die aus mit Kunstharz als Bindemittel verpressten Holzspänen oder -fasern hergestellt worden sind. Eine spezielle Technologie besteht darin, die vorgesehenen Flachpressplatten, die in diesem Falle auch unebene Formen aufweisen können, nur vorzupressen, bis eine genügende Bindungsfestigkeit erreicht ist, dann die harzgetränkten Papiere aufzulegen (wobei auch eine vollständige Umhüllung möglich ist) und dann zu Ende zu pressen. Bei einer weiteren Ausführungsform wird der Holzwerkstoffträger in einem Direktbeschichtungsverfahren im Allgemeinen beidseitig durch Verpressung und unter Wärmeeinwirkung mit zuvor nicht miteinander verpressten, teilweise dekorativen Trägerbahnen beschichtet, die mit härtbaren Kondensationsharzen imprägniert sind. Das Harz der Dekorschicht ist zum überwiegenden Teil Melaminharz. Die Plattenoberflächen können zur Erzielung gewünschter Lichtbrechungseffekte oder Oberflächeneigenschaften eben oder strukturiert sein. Des Weiteren werden Oberflächeneigenschaften, wie zum Beispiel die mechanische Belastbarkeit, die insbesondere bei Arbeits- oder Tischplatten von Bedeutung ist, durch die Materialauswahl der äußeren Lage den dekorativen Schicht wesentlich bestimmt. Die Materialauswahl legt auch Lichtbrechungseigenschaften fest, wobei es hier wesentlich auf die letzte von außen sichtbare Lage ankommt, wenn beispielsweise die äußere Lage transparent ist.

Über der dekorativen Schicht bzw. beim Vorhandensein eines Overlays über diesem Overlay kann weiterhin nach einem nicht vorveröffentlichten Vorschlag der deutschen Gebrauchsmusteranmeldung 100 07 621.1 für die Dauer des Pressvorgangs als oberste Schicht ein durchbrochenes Metallblech entsprechenden Musters aufgelegt und nach dem Entformen wieder entfernt werden. Es versteht sich, dass darüber im allgemeinen die übliche Zulage, also ein Preßblech aufgelegt wird, das nach dem Entformen ebenfalls wieder entfernt wird. Das durchbrochene Metallblech kann im allgemeinen mehrmals verwendet werden und bildet eine Matrize, deren Stärke dem gewünschten Vertiefungseffekt angepasst werden muß. Geeignete Bleche jeder gewünschten Stärke, die z.B. 0,01 bis 1 mm betragen kann, sind im Handel erhältlich. Auf diese Weise können zusätzlich zu den erfindungsgemäßen Oberflächeneffekten, wie sie mit zwei Dekorpapieren möglich sind, von denen das obere Durchbrüche aufweist, weitere Oberflächeneffekte erzielt werden. Das zur Benutzung dieses Verfahrens erforderliche durchbrochene Metallblech kann im einfachsten Fall eine Gitterstruktur haben oder gelocht sein, wobei Form, Zahl, Größe und Anordnung der Durchbrüche beliebig sein kann. Auch der Flächenanteil der Durchbrüche im Verhältnis zur Gesamtfläche kann fast beliebig sein und z.B. 1 bis 75 % oder mehr betragen. Es sollte aus rein praktischen Gründen allerdings eine Materialmenge verbleiben, die sich als zusammenhängende Bahn noch handhaben läßt. Eine Restfläche von 25 % der Gesamtfläche dürfte auf jeden Fall noch gut handhabbar sein.

Der erfindungsgemäß erhältliche plattenförmige Verbundwerkstoff oder Schichtstoffkörper weist gemäß der beigegebenen Zeichnung (Figur 1) folgenden Schichtaufbau auf:
eine aus mindestens einem, mit einem Formaldehyd-Kondensat getränkten Papier aufgebaute Ausgleichsschicht P;
eine vorzugsweise einlagige, harzgebundene, als Dekorträger dienende Papierschicht D1 und/oder Metallfolie M, wobei gegebenenfalls die Metallschicht M mindestens eine Kleber- oder Haftvermittlerschicht aufweist;
eine vorzugsweise einlagige, harzgebundene, als Dekorträger dienende, Durchbrüche aufweisende Papierschicht D2;
bedarfsweise mindestens eine Lage einer zellulosehaltigen harzgebundenen Deckschicht (Overlay) O;
und ist erfindungsgemäß dadurch gekennzeichnet, dass er erhalten wird, wenn man die als Dekorträger dienende, Durchbrüche aufweisende Papierschicht D2 aus einer harzgetränkten Papierbahn aufbaut, die vor dem Herstellen der Durchbrüche vorgehärtet und nach dem Herstellen der Durchbrüche in an sich bekannter Weise auf den zu verpressenden Stapel aufgelegt worden ist.

Es versteht sich, dass die erfindungsgemäß vorgehärtete Papierbahn D2 nicht die oberste Schicht des fertigen Schichtstoffkörpers bilden muß, d.h. der Schichtaufbau kann erfindungsgemäß weitere Merkmale aufweisen, ohne dass der Bereich der Erfindung verlassen wird. Z.B. kann über dem erfindungsgemäßen Schichtaufbau ohne weiteres ein sog. Overlaypapier aufgelegt werden, das etwa die Verschleißfestigkeit und Güte der Oberfläche des Schichtstoffes, aber auch die Farbqualität erhöht. Oder sie kann noch teilweise mit einer Metallfolie beschichtet sein, die z.B. ebenfalls Durchbrüche aufweist oder eine spezielle Oberflächenstruktur (z.B. kann sie gebürstet oder sandgestrahlt sein), wobei der Gestaltungsmöglichkeit keine Grenzen gesetzt sind.

Erfindungsgemäße Platten können auch erhalten werden, indem man einen bereits durch einen Pressvorgang erhaltenen Grundwerkstoff, d.h. Tragekörper aus einem Holzwerkstoff oder Holzfaserwerkstoff anstelle des Beklebens mit einem vorgefertigten Schichtstoff mit der erfindungsgemäßen Schichtenfolge belegt und das Ganze nochmals in eine beheizbare Plattenpresse bringt und in einem Zug verbindet. Diese weisen dann einen Schichtaufbau auf, der z.B. durch die Figur 2 wiedergegeben und nachstehend noch näher erläutert wird. Die erfindungsgemäße Struktur kann demnach nicht nur auf einer reinen Schichtstoffplatte erzeugt werden, sondern auch auf einer Platte, wie man sie erhält, wenn man in an sich bekannter Weise zusammen mit den Papierlagen eine vorgeformte Platte aus einem Holzwerkstoff, z.B. eine Span- oder Tischlerplatte in die Presse einlegt und verpresst. Wie allgemein bekannt, sollte in diesem Falle auf der Rückseite der Holzwerkstoffplatte ein entsprechender Schichtaufbau stattfinden, als sog. Gegenzug (G in der nachstehend noch näher erläuterten Figur 2), um ein späteres Verwerfen der Platte zu verhindern.

Wenn ein erfindungsgemäßer plattenförmiger Verbundwerkstoff (mit oder ohne Tragekörper aus einem Holzwerkstoff) mit einer oberflächlichen Reliefstruktur ausgestattet werden soll, so kann dies in üblicher Weise durch Wahl eines entsprechend strukturierten Pressblechs geschehen, das nach der Pressung wiederverwendet werden kann.

Es gibt unterschiedliche Konstruktionen von Plattenpressen, wie z.B. Ein- und Mehretagenpressen, jedoch werden aus verschiedenen Gründen praktisch nur mehr Einetagenpressen gebaut. In der Regel werden sie mit Dampf geeigneten Drucks bzw. geeigneter Temperatur oder elektrisch beheizt und weisen eine beträchtliche Wärmekapazität auf, was das Pressen zu einer energetisch und technisch aufwendigen Angelegenheit macht.

Die eingangs gegebenen Erläuterungen zum Aufbau sog. vergüteter Holzwerkstoffe sind auch auf die Erfindung anzuwenden. Die Oberflächen erfindungsgemäß beschichteter Holzwerkstoffe, insbesondere vergüteter Spanplatten haben im Prinzip den gleichen Aufbau wie eine Schichtstoffplatte, sind aber unmittelbar auf der Holzwerkstoffoberfläche hergestellt. Sie bestehen bedarfsweise aus einem Grundkörper aus einer oder mehreren Lagen des mit Kunstharz getränkten Trägers und einer darüberliegenden Dekorschicht, im vorliegenden erfindungsgemäßen Fall einer Schicht mit mehreren Dekoreffekten die durch Verwendung mehrerer Dekorpapiere übereinander gekennzueichnet ist. Beteiligt kann insbesondere auch eine Metalloberfläche sein. Grundkörper und Dekorschicht sind durch das gemeinsame Aushärten unter Druck- und Wärmeeinwirkung miteinander verbunden.

Das über der erfindungsgemäßen Dekorschicht bedarfsweise aufzubringende sog. Overlay soll des darunterliegende Muster zur Geltung kommen lassen. Geeignete harzgetränkte Papiere, die in der Regel reine Zellulosepapiere sind (vgl. oben), enthalten als Bindemittel wegen der angestrebten Haltbarkeit vor allem duroplastisch härtbare Melaminharze und sind handelsüblich.

Die erfindungsgemäß erhältliche, mit einer kunstharzgebundenen Oberfläche mit mehreren Dekoreffekten ausgestattete Holzwerkstoffplatte besteht gemäß der beigegebenen Zeichnung (Figur 2), von der Unterseite aus aufgezählt, mindestens aus:
bedarfsweise (gegebenenfalls) einer ein- oder mehrlagigen Gegenzugschicht G;
einem Tragekörper H aus einem Holzwerkstoff, insbesondere einer Spanplatte;
bedarfsweise (gegebenenfalls) einer aus mindestens einem, mit einem Formaldehyd-Kondensat getränkten Papier aufgebauten Ausgleichsschicht P;
einer vorzugsweise einlagigen harzgebundenen, als Dekorträger dienenden Papierschicht D1 und/oder einer mit einem Kleber oder Haftvermittler versehenen Metallschicht M;
einer vorzugsweise einlagigen harzgebundenen, als Dekorträger dienenden Papierschicht D2, die Durchbrüche aufweist;
bedarfsweise (gegebenenfalls) mindestens einer Lage einer zellulosehaltigen harzgebundenen Deckschicht (Overlay) O;
und ist erfindungsgemäß dadurch gekennzeichnet, dass sie erhalten wird, wenn man die als Dekorträger dienende, Durchbrüche aufweisende Papierbahn D2 vor dem Herstellen der Durchbrüche vorhärtet und nach dem Herstellen der Durchbrüche auf den zu verpressenden Stapel auflegt.

Die erfindungsgemäß erhältliche, mit einer kunstharzgebundenen Oberfläche mit mehreren Dekoreffekten ausgestattete Holzwerkstoffplatte kann mit der die Oberfläche nur teilweise überdeckenden Metallfolie M zusätzlich ausgestattet sein, d.h. dass sowohl eine Papierschicht D1 als auch eine Metallfolie vorhanden ist, die sich flächenmäßig ergänzen, je nach dem gewünschten Dekoreffekt. Auf den Flächenanteil und die Form der Metallfolie im Verhältnis zur Dekor-(d.h. Kunststoff-)oberfläche kommt es dabei nicht an, d.h. das Flächenverhältnis und die Form wird lediglich durch ästhetische, nicht durch technische Gründe bestimmt und kann demnach beliebige Werte annehmen; die Metallschicht M kann zwischen 0 und 100 Prozent, bevorzugt 0 bis 50 Prozent der Fläche bilden und entsprechend der sichtbare Teil der Papierschicht D1 einen Flächenanteil von 100 bis 0, bevorzugt 100 bis 50 % haben.

Da der Holzwerkstoffkörper im allgemeinen eine genügende Steifigkeit besitzt, ist es in diesem Fall nicht unbedingt erforderlich, eine Ausgleichsschicht P zu verwenden, sondern man kann unmittelbar die Schicht D1 bzw. M aufbringen, wenn die Oberfläche des Holzwerkstoffkörpers gut vorbereitet, d.h. glatt genug ist.

Wenn über dem Dekorpapier in an sich bekannter Weise noch ein Overlaypapier, d.h. mindestens eine Lage einer zellulosehaltigen, ebenfalls harzgebundenen, im wesentlichen transparenten Deckschicht aufgebracht wird, erhält man eine besonders haltbare und farbintensive Dekoroberfläche.

Wenn ein erfindungsgemäß plattenförmiger Verbundwerkstoff (mit oder ohne Tragekörper aus einem Holzwerkstoff) mit einer oberflächlichen Reliefstruktur ausgestattet werden soll, so kann dies in üblicher Weise durch Wahl eines entsprechend strukturierten Pressblechs geschehen, das nach der Pressung wiederverwendet werden kann.

Die erfindungsgemäße beschichtete Holzwerkstoffplatte ist in der Regel auf ihrer Unterseite ebenfalls mit einem Schichtaufbau versehen, der im Aufbau der Oberseite (d.h. der Schauseite) entspricht, jedoch keine dekorative Schicht aufweisen muß und dann lediglich als sog. Gegenzugschicht dient (in der Figur 2 mit G bezeichnet), die den unvermeidlichen Spannungen entgegenwirkt, die die Beschichtung der Schauseite hervorruft. Natürlich kann aber die erfindungsgemäße beschichtete Holzwerkstoffplatte auch auf der Unterseite mit dem erfindungsgemäßen Aufbau in entgegengesetzter Schichtenfolge versehen sein, wie es z.B. für Trennwände sanitärer Anlagen oder sonst im öffentlichen Bereich verlangt wird.

Der erfindungsgemäße Aufbau kann entsprechend den beigegebenen Abbildung leicht dadurch festgestellt werden, dass man den betreffenden Formkörper senkrecht zur Oberfläche schneidet, ggf. anschleift und den Schichtaufbau bei entsprechender Vergrößerung z.B. mit einer Lupe betrachtet. Die Art und Weise der Vorbehandlung der durchbrochenen Schicht D2 ist auf diese Weise natürlich im allgemeinen nicht mit den gegenwärtigen Mitteln nicht feststellbar, jedoch gibt die Ausbildung der Ränder der Durchbrüche, z.B. deren Kantenschärfe Hinweise.

Zur Herstellung einer erfindungsgemäßen Schichtstoffplatte oder plattenförmigen Verbundwerkstoffs ist im einzelnen das folgende zu sagen:

Als Tragekörper zur Herstellung von erfindungsgemäßen Werkstoffplatten wird in der Regel eine Spanplatte verwendet. Je nach dem späteren Verwendungszweck können harnstoffharzgebundene, phenolharzgebundene oder polyisocyanatgebundene Spanplatten eingesetzt werden. Sperrholzplatten, Tischlerplatten, Hartfaserplatten und andere Holzwerkstoffe sind als Tragekörper gleichfalls geeignet, soweit sie der Verarbeitung in einer beheizbaren Plattenpresse widerstehen.

Als Trägermaterial für die Ausgleichsschicht wird genau wie bei der Herstellung von Schichtstoffplatten ohne Holzwerkstoffträger i.a. sog. Kraftpapier verwendet; im übrigen ist hier Papier im weitesten Sinne gemeint - es können auch andere, papierähnliche, geeignete Träger wie Vliesstoffe (sog. non-woven fabrics), Gewebe o.ä. verwendet werden. Als Harze für die Herstellung der Ausgleichsschicht werden i.a. Phenol-Formaldehyd-Kondensate verwendet. Diese Harze sind in Form des harzgetränkten Papiers zunächst als sogenannte Vorkondensate vorhanden (bei Phenolharzen "Resole" genannt), die fließfähig, d.h. thermoplastisch verformbar sind und in der Wärme (oberhalb von etwa 100°C), nach der klassischen Einteilung der Aushärtungszustände allmählich in den unlöslichen und unschmelzbaren "Resitol"- und schließlich "Resit"-Zustand übergehen.

Die Papierträger für die Dekorschichten D1, D2 und gegebenenfalls das Overlay O sind üblicherweise reine Zellulosepapiere. Als Kunstharz für die Dekorschicht ist vor allem Melaminharz, d.h. ein Melamin-Formaldehyd-Vorkondensat geeignet, das in der Wärme wie das Phenolharz unter Vernetzung aushärtet. Geeignet sind aber auch andere duroplastisch härtbare Harze wie Harnstoffharze (wenn es auf z.B. Witterungsbeständigkeit weniger ankommt) sowie Epoxidharze, Polyesterharze, Polyurethanharze oder wärmehärtbare Acrylharze.

Alle diese Harze sind handelsüblich und ihre Verarbeitung ist in der Fachliteratur oder den Druckschriften der Hersteller beschrieben. Ferner sind vorgefertigte harzgetränkte Papiere sowohl zur Herstellung der Ausgleichsschicht wie der Dekorschicht im Handel.

Zur Verklebung der Metallfolie mit den Kunststoffbahnen können unterschiedliche Mittel verwendet werden; z.B. können Schmelzkleber (thermoplastisch verarbeitbare Kleber auf der Grundlage z.B. von Vinylpolymerisaten) oder duroplastisch aushärtbare (wärmereaktive) Kleber eingesetzt werden, die eine ausreichende Affinität zur Metalloberfläche aufweisen (z.B. handelsübliche Metallkleber auf der Grundlage von Kresol-Formaldehyd-Kondensaten, die in Form von Lackfilmen aufgetragen werden können). Auch diese Klebstoffe sind weitgehend handelsüblich.

Der erfindungsgemäße Pressvorgang geschieht in einer üblichen Plattenpresse. Der Pressdruck kann z.B. zwischen 10 und 200 bar betragen, was auch von der Leistungsfähigkeit der Presse abhängt und nicht erfindungsspezifisch ist. Die Presstemperatur liegt i.a. zwischen 100 und 200°C. Aus wirtschaftlichen oder technischen Gründen kann es zweckmäßig sein, während des Härtungsvorgangs die Temperatur und/oder den Druck abnehmen oder ansteigen zu lassen. Wegen der unterschiedlichen Reaktivität der handelsüblichen Harze lässt sich ein allgemeiner Zeitbedarf für die Aushärtung nicht angeben; ggf. ist die beste Härtezeit durch einen Vorversuch zu ermitteln.

Nach dem Entformen lässt sich die gegebenenfalls zur Reliefgebung mitverpresste Metallfolie ohne weiteres wieder entfernen, da Metallfolien ohne Kleberschicht auf dem erfindungsgemäßen Schichtaufbau nicht haften.

## Patentansprüche

1. Verfahren zur Herstellung dekorativer Schichtstoffkörper oder Verbundwerkstoffe, deren von außen sichtbare Oberfläche durch mindestens zwei übereinander angeordnete Schichten oder Lagen aus mindestens einem harzgetränkten Papier mit dekorativem Muster und/oder einer Metallfolie als untere Lage und einem harzgetränkten Papier mit dekorativem Muster als obere Lage gebildet wird, durch Verpressen mehrerer Einzellagen von harzgetränkten Papierbahnen, wobei die obere Bahn aus einem mit Durchbrüchen versehenen Dekorpapier besteht, das die Sicht auf die darunter befindliche Lage aus Dekorpapier und/oder Metallfolie teilweise freigibt, **dadurch gekennzeichnet, daß** eine mit Durchbrüchen versehene Bahn eines harzgetränkten Dekorpapiers eingesetzt wird, die vor dem Herstellen der Durchbrüche einer Wärmebehandlung unterworfen worden ist.

2. Verfahren nach Anspruch 1, **dadurch gekennzeichnet, daß** man zur Erzielung eines zusätzlichen dekorativen Elements, nämlich einer Reliefstruktur über der Dekorschicht für die Dauer des Pressvorgangs ein durchbrochenes, nicht mit einem Kleber versehenes Metallblech auflegt und nach dem Verpressen wieder entfernt.

3. Verfahren nach Anspruch 2, **dadurch gekennzeichnet, daß** das durchbrochene Metallblech eine Matrize bildet, deren Stärke dem gewünschten Vertiefungseffekt entspricht und z.B. 0,01 bis 1 mm beträgt.

4. Schichtstoffkörper bestehend gemäß der beigegebenen Zeichnung (Figur 1) mindestens aus
- einer aus mindestens einem, mit einem Formaldehyd-Kondensat getränkten Papier aufgebauten Ausgleichs- oder Trägerschicht P;
- einer vorzugsweise einlagigen harzgebundenen, als Dekorträger dienenden Papierschicht D1 und/oder Metallfolie M, wobei gegebenenfalls die Metallschicht M mindestens eine Kleber- oder Haftvermittlerschicht aufweist;
- einer vorzugsweise einlagigen harzgebundenen, als Dekorträger dienenden und Durchbrüche aufweisenden Papierschicht D2, die Durchbrüche aufweist;
- bedarfsweise mindestens eine Lage einer zellulosehaltigen harzgebundenen Deckschicht (Overlay) O;
wie er erhalten wird, wenn man die als Dekorträger dienende, Durchbrüche aufweisende Papierbahn D2 vor dem Herstellen der Durchbrüche vorhärtet und nach dem Herstellen der Durchbrüche in an sich bekannter Weise auf den zu verpressenden Stapel auflegt.

5. Schichtstoffkörper oder Verbundwerkstoff, nämlich mit einer kunstharzgebundenen Oberfläche mit mehreren Dekoreffekten ausgestattete Holzwerkstoffplatte, bestehend, von der Unterseite her aufgezählt, gemäß der beigegebenen Zeichnung (Figur 2) mindestens aus
- bedarfsweise einer ein- oder mehrlagigen Gegenzugschicht G;
- einem Tragekörper H aus einem Holzwerkstoff, insbesondere einer Spanplatte;
- bedarfsweise einer aus mindestens einem, mit einem Formaldehyd-Kondensat getränkten Papier aufgebauten Ausgleichsschicht P;
- einer vorzugsweise einlagigen harzgebundenen, als Dekorträger dienenden Papierschicht D1 und/oder einer Metallschicht M, wobei gegebenenfalls die Metallschicht M mindestens eine Kleber- oder Haftvermittlerschicht aufweist;
- einer vorzugsweise einlagigen harzgebundenen, als Dekorträger dienenden Papierschicht D2, die Durchbrüche aufweist;
- bedarfsweise mindestens einer Lage einer zellulosehaltigen harzgebundenen Deckschicht (Overlay) O;
wie er erhalten wird, wenn man die als Dekorträger dienende, Durchbrüche aufweisende Papierbahn D2 vor dem Herstellen der Durchbrüche vorhärtet und nach dem Herstellen der Durchbrüche in an sich bekannter Weise auf den zu verpressenden Stapel auflegt.
